# EUROPEAN PATENT SPECIFICATION

(11) **EP 1 658 473 B1**
(45) Date of publication and mention of the grant of the patent: **30.10.2013**
(21) Application number: 04816831.4
(22) Date of filing: 26.08.2004
(51) Int. Cl.: G01C 23/00, G08G 5/00

(54) **INTEGRATED FLIGHT MANAGEMENT AND TEXTUAL AIR TRAFFIC CONTROL DISPLAY SYSTEM AND METHOD**
INTEGRIERTES FLUGLEIT- UND TEXTFLUGVERKEHRSTEUERANZEIGESYSTEM UND VERFAHREN
SYSTEME D'AFFICHAGE DE GESTION DE VOL INTEGRE ET DE COMMANDE DE TRAFIC AERIEN TEXTUEL AINSI QUE PROCEDE ASSOCIE

(30) Priority: 26.08.2003 US 650008
(43) Date of publication of application: 24.05.2006
(73) Proprietor: Honeywell International Inc., Morristown, NJ 07960 (US)
(72) Inventor: DWYER, David, B., Scotsdale, AZ 85254 (US)
(74) Representative: Buckley, Guy Julian
(86) International application number: PCT/US2004/027732
(87) International publication number: WO 2005/038748

(56) References cited:
- EP-A- 0 798 685
- US-A- 4 706 198
- US-A- 5 732 384
- US-A- 6 112 141

## Description

### TECHNICAL FIELD

The present invention generally relates to aircraft flight management system displays and, more particularly, to a flight management system display that integrates graphical flight planning with textual air traffic control clearance messages.

### BACKGROUND

Presently, most air traffic control systems around the world utilize voice communications to transmit various messages between air traffic controllers and pilots. The messages that are transmitted between air traffic controllers and pilots include, among other things, air traffic control clearances, various advisories, and aviation weather services, which help ensure coordination of aircraft movement, and appropriate aircraft separation. As air travel has increased over the years, controller-pilot communication has concomitantly increased to the point that the voice communication channels have, at many locations, become saturated during peak aircraft traffic periods. Moreover, at the frequencies generally used for air traffic control voice communications, the communications are limited to line-of-sight. Thus, once an aircraft is no longer within a line-of-sight path with an air traffic control center, voice communication is no longer available.

To reduce the amount of controller-pilot voice communication that presently occurs, and to alleviate the reliance on the concomitant line-of-sight communications, a new data communication system has been developed that relies on data communication of certain controller-pilot communications. With this new communication system, some routine controller-pilot communications that are presently transmitted over a voice communications channel can be transmitted over a data communications channel, thus freeing up the voice communications channel for the less routine messages. For example, the data communication system allows various textual aircraft take-off and approach clearance messages to be transmitted and received, to and from, an aircraft over a data channel. These textual messages are presently processed and displayed via a separate, dedicated message display system.
Although the present controller-pilot data communication system implementation is generally reliable, safe, and reduces the communication load over the voice communication channels, it does suffer certain drawbacks. For example, the textual messages that are transmitted to and from an aircraft are standardized, thus pilot initiated textual messages are presently created using a "cut-and-paste" implementation, in which the pilot selects one or more standard portions of text from a list and places it in the message. This operation can be cumbersome, time-consuming, and can distract from the pilot's main tasks. Moreover, because the system is implemented separate from the aircraft flight management system, if a clearance message transmitted to the aircraft instructs the pilot to modify the aircraft's current flight plan, once the pilot acknowledges the message, he or she may then need to update the flight plan in the aircraft flight management system. Again, this added operation can be cumbersome, time-consuming, and a distraction to the pilot. Moreover, because the messages are displayed on a separate display, the pilot's attention may be diverted away from the main flight deck display(s).
Hence, there is a need for a system and method that addresses one or more of the above-noted drawbacks. Namely, a system and method for transmitting, receiving, initiating, and displaying textual air traffic control clearance messages that is less cumbersome, less time-consuming, and less distractive to a pilot, and/or alleviates the need for a pilot to separately update the aircraft flight plan using the flight management system when the textual clearance message requests such a modification, and/or does not divert the pilot's attention away from the aircraft's main flight deck display(s). The present invention addresses one or more of these needs. Furthermore, other desirable features and characteristics of the present invention will become apparent from the subsequent detailed description and the appended claims, taken in conjunction with the accompanying drawings and the foregoing technical field and background.
US6,112,141 discloses a system in which a pilot may enter and modify a flight plan. US4,706,198 discloses a distributed air traffic control system comprising a master control unit and a plurality of rigid control unit.
The present invention provides an aircraft flight management display system for displaying air traffic control clearance messages transmitted to an aircraft, the system comprising:
a processor adapted to receive (i) data representative of a current aircraft flight plan and (ii) one or more textual clearance message signals representative of the air traffic control clearance messages transmitted to the aircraft and operable, in response thereto, to (i) determine if at least one of the textual air traffic control clearance messages indicates the current flight plan should be modified to a modified aircraft flight plan, and (ii) supply one or more flight plan display commands and one or more textual clearance message display commands; and
a display coupled to receive the flight plan display commands and the textual clearance message display commands and operable, in response thereto, to substantially simultaneously display (i) one or more images representative of the current aircraft flight plan, and (ii) the textual air traffic clearance messages transmitted to the aircraft, and (iii) one or more images representative of the modified aircraft flight plan when at least one of the textual air traffic control clearance messages indicates the current flight plan should be modified.
The system alleviates the need for a pilot to separately update the aircraft flight plan if the textual clearance message requests such a modification.
The present invention will hereinafter be described in conjunction with the following drawing figures, wherein like numerals denote like elements, and wherein:
FIG. 1 is a functional block diagram of an exemplary flight management system according to one embodiment of the present invention;
FIG. 2 is a simplified representation of an exemplary display screen that may be used in the system of FIG. 1, which shows the overall layout of the display screen, and on which is various graphical and textual images are simultaneously displayed;
FIG. 3 is a flowchart that depicts an exemplary embodiment of the process implemented by the system of FIG. 1 to display the graphical and textual images that are displayed on the display screen of FIG. 2; and
FIGS. 4-7 are simplified representations of exemplary display screens that may be used in the system of FIG. 1, and on which the various graphical and textual images are displayed at certain points in the process of FIG. 3.

### DETAILED DESCRIPTION

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

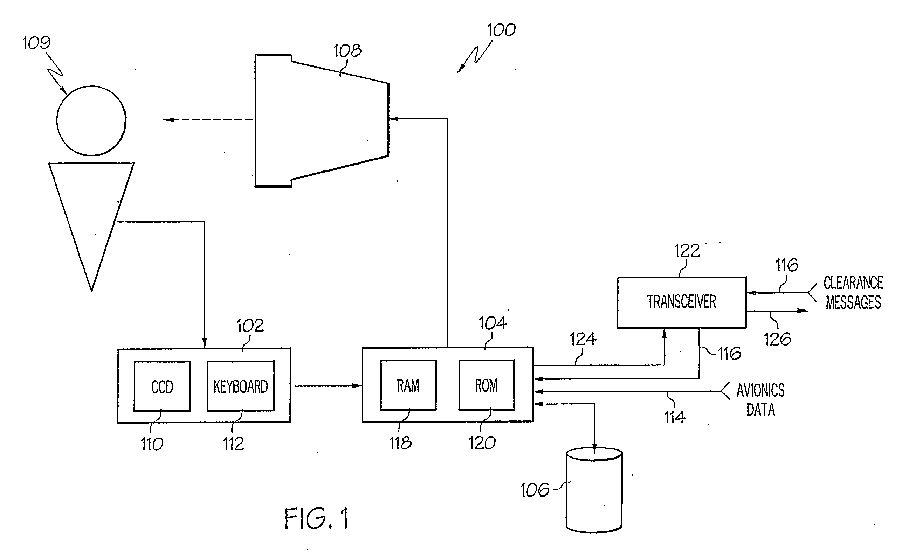

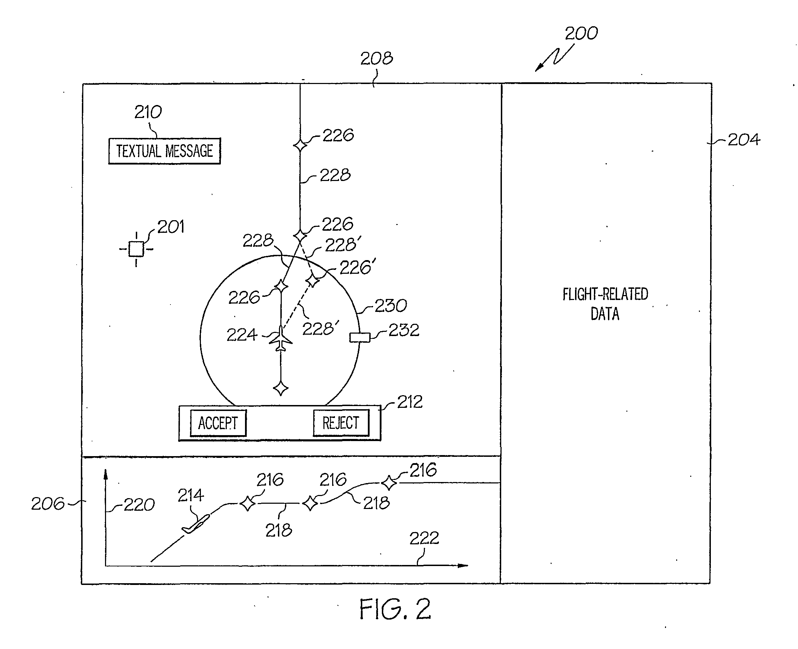

Turning now to the description, and with reference to FIG. 1, an exemplary flight management system (FMS) will be described. The system 100 includes a user interface 102, a processor 104, one or more navigation databases 106, and a display 108. The user interface 102 is in operable communication with the processor 104 and is configured to receive input from a user 109 (e.g., a pilot) and, in response to the user input, supply command signals to the processor 104. The user interface 102 may be any one, or combination, of various known user interface devices including, but not limited to, a cursor control device (CCD) 110, such as a mouse, a trackball, or joystick, and/or a keyboard, one or more buttons, switches, or knobs. In the depicted embodiment, the user interface 102 includes a CCD 110 and a keyboard 112. As will be described more fully below, the user 109 uses the CCD 110 to, among other things, move a cursor symbol 201 on the display screen (see FIG. 2), and may use the keyboard 112 to, among other things, input textual data for subsequent transmission to air traffic control centers.

The processor 104, as was just noted, is in operable communication with, and receives user input commands from, the user interface 102. The processor 104 is additionally in operable communication with the navigation databases 106, and with the display 108, and is coupled to receive various types of avionics data 114 from various remote systems and/or sensors (not illustrated), and to receive signals 116 representative of air traffic control clearance messages. The processor 104 receives the user input commands supplied from the user interface 102 and is configured, in response to these user input commands, to selectively retrieve data from one or more of the navigation databases 106 and supply appropriate display commands to the display 108, so that the retrieved data is appropriately displayed on the display 108. The processor 104 is additionally configured to supply appropriate display commands to the display 108 so that the avionics data 114 may be selectively displayed on the display 108.

The processor 104 may be any one of numerous known general purpose microprocessors or an application specific processor that operates in response to program instructions. In the depicted embodiment, the processor 104 includes on-board RAM (random access memory) 118, and on-board ROM (read only memory) 120. The program instructions that control the processor 104 may be stored in either or both the RAM 118 and the ROM 120. For example, the operating system software may be stored in the ROM 120, whereas various operating mode software routines and various operational parameters may be stored in the RAM 118. It will be appreciated that this is merely exemplary of one scheme for storing operating system software and software routines, and that various other storage schemes may be implemented. It will also be appreciated that the processor 104 may be implemented using various other circuits, not just a programmable processor. For example, digital logic circuits and analog signal processing circuits could also be used.

The navigation databases 106 include various types of navigation-related data. Such navigation-related data includes various flight plan related data such as, for example, waypoints, distances between waypoints, headings between waypoints, data related to different airports, navigational aids, obstructions, special use airspace, political boundaries, communication frequencies, and aircraft approach information. It will be appreciated that, although the navigation database 106 is, for clarity and convenience, shown as being stored separate from the processor 104, the database 106 could be loaded into the on-board RAM 118, or the database 106 could be integrally formed as part of the processor 104, and/or RAM 118, and/or ROM 120. The navigation database 106 could also be part of a device or system that is physically separate from the display system 100. The avionics data 114 that is supplied from remote systems and/or sensors includes data representative of the state of an aircraft such as, for example, aircraft speed, altitude, and heading.

The air traffic control signals 116 are transmitted to an aircraft via, for example, modulated radio frequency (RF) signals. The air traffic control signals 116 are received and demodulated by a transceiver 122, and are then supplied to the processor 104. The air traffic control signals 116 each include data representative of one or more air traffic control clearance messages. Thus, the processor 104 further processes the signals 116 and supplies one or more display commands to the display 108, such that the clearance messages are displayed in both a textual format and a graphical format. As will be described more fully below, the processor 104 also supplies air traffic control response signals 124 to the transceiver 122, which in turn modulates the response signals 124 and transmits the modulated response signals 126 to an air traffic control station (not shown). In the depicted embodiment, the transceiver 122 is separate from the processor 104. However, it will be appreciated that the transceiver 122 could be implemented as part of the processor 104.

The display 108 is used to display various images and data, in both a graphical and a textual format, and to supply visual feedback to the user 109 in response to the user input commands supplied by the user 109 to the user interface 102. It will be appreciated that the display 108 may be any one of numerous known displays suitable for rendering image and/or text data in a format viewable by the user 109. Non-limiting examples of such displays include various cathode ray tube (CRT) displays, and various flat panel displays such as, various types of LCD (liquid crystal display) and TFT (thin film transistor) displays. To provide a more complete description of the method that is implemented by the flight management system 100, a general description of the display 108 and its layout will now be provided.

With reference to FIG. 2, it seen that the display 108 includes a display area 202 in which multiple graphical and textual images may be simultaneously displayed. For example, general flight-related data 204, a vertical profile 206, a lateral map 208, a textual air traffic control message 210, and a user interface field 212 may be displayed simultaneously, alone, or in various combinations. The general flight-related data 204 that is displayed may include various types of data related to the flight plan of the aircraft. Such data includes, but is not limited to, the flight identifier, route iteration number, a waypoint list and associated information, such as bearing and time to arrive, just to name a few. It will be appreciated that the general flight-related data 204 may additionally include various types of data associated with various types of flight hazards. Examples of these, and other types of data that may be displayed, are disclosed in U.S. Patent No. 6,289,277, entitled "Interfaces for Planning Vehicle Routes," which is assigned to the assignee of the present application, and the entirety of which is hereby incorporated by reference.

The vertical profile 206 includes a side-view aircraft symbol 214, one or more waypoint symbols 216, line segments 218 that interconnect the waypoint symbols 216, a vertical axis 220, and a horizontal axis 222. The aircraft symbol 214 is preferably displayed with an orientation substantially equivalent to the actual orientation of the aircraft. The waypoint symbols 216 and interconnecting line segments 218 correspond to the current flight path and flight plan of the aircraft. The vertical axis 220 represents aircraft altitude and is suitably graduated with altitude values (not shown), and the horizontal axis 222 represents aircraft lateral position and is suitably graduated with lateral distance values (not shown). It will be appreciated that the horizontal axis 222 could alternatively be graduated with time values in addition to, or instead of, lateral distance values.

The lateral map 208 includes a top-view aircraft symbol 224, one or more waypoint symbols 226, line segments 228 that interconnect the waypoint symbols, and one or more range rings 230. The lateral map 208 also preferably includes various map features including, but not limited to, terrain, political boundaries, and navigation aids, which, for clarity, are not shown in FIG. 2. The range rings 230, only one of which is shown in FIG. 2, indicate nautical distance from the top-view aircraft symbol 224. In the illustrated embodiment, the range ring 230 includes a range indicator 232, which displays the lateral distance from the aircraft's present position to the position on the lateral map 202 that corresponds to the range ring 230 (e.g., 200 nautical miles). It will be appreciated that the value of the range indicator 232 may be set manually or automatically, via a non-illustrated a pop-up menu. As will be described more fully below, the lateral map 208 may also include updated waypoint symbols 226' and line segments 228'. The purpose and circumstances under which these updated waypoint symbols 226' and line segments 228' are displayed on the lateral map 208 will be described in more detail further below.

The textual air traffic control messages 210 that are displayed in the display area 202 correspond to the above-mentioned air traffic control signals 116 that are received and demodulated by the transceiver 122, and processed by the processor 104. The user interface field 212, as will be described more fully below, is displayed whenever a textual air traffic control signal 116 is received and processed by the processor 104, and the corresponding textual air traffic control message 210 is displayed. Preferably, the textual messages 210 and user interface field 212 are automatically displayed each time a textual air traffic control signal 116 is received and processed by the processor 104. Moreover, the message 210 and user interface field 212 both preferably remain displayed until the processor 104 receives an appropriate response via the user interface field 212, preferably in the form of a user command signal supplied from the user interface 102. Once an appropriate response to the displayed message 210 is received, the message 210 and user interface field 212 are preferably no longer displayed in the display area 202. In a particular preferred embodiment, the message 210 and user interface field 212 are both simultaneously displayed on the lateral map 208. It will be appreciated that this is merely exemplary of a particular preferred embodiment, and that either, or both, could be displayed with the other graphical and textual images described above.

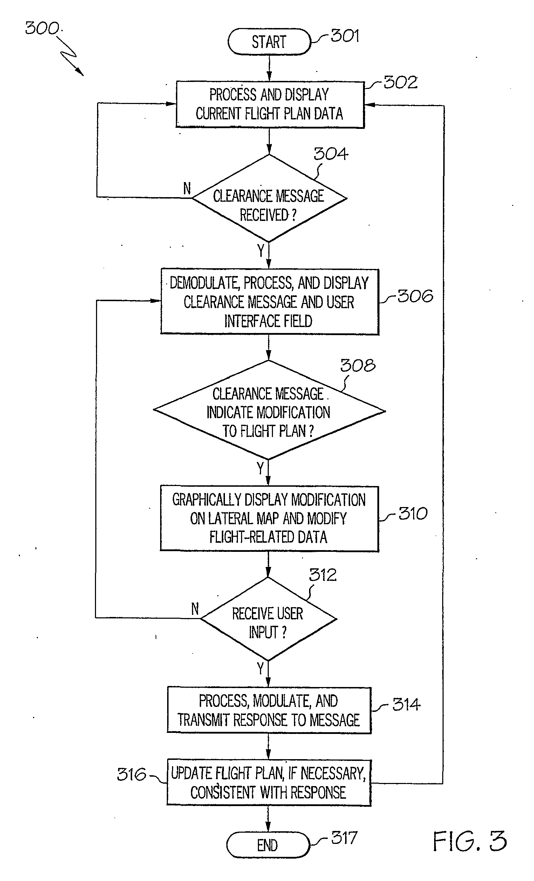

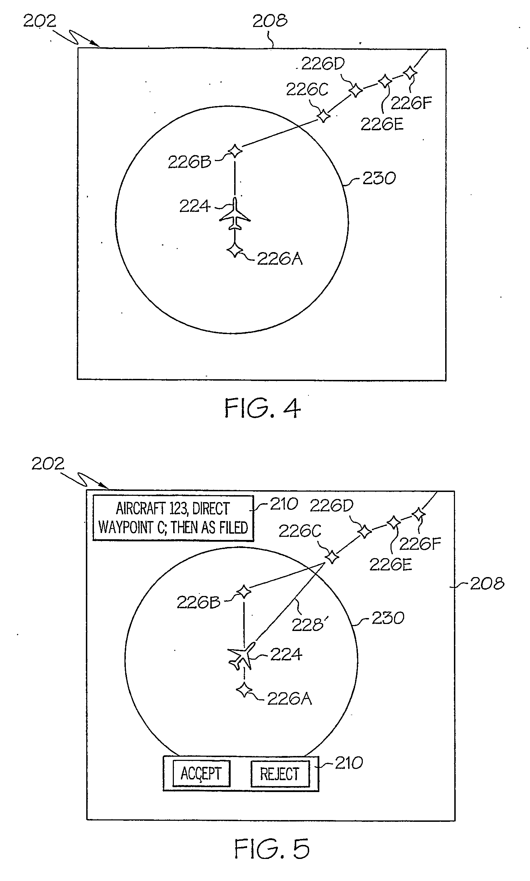

Having described a particular embodiment of the system 100, and the general layout of the display area 202, from a structural standpoint, and having generally described the overall functionality of the system 100, a more detailed description of a process implemented by the system 100 to simultaneously display flight management data and textual air clearance messages on the same display 108 will be provided. In doing so, reference should be made, as appropriate, to FIGS. 1, 2, and 4-7, in combination with FIG. 3, which illustrates an exemplary process implemented by the system 100. It should be noted that the parenthetical reference numerals in the following description correspond to like reference numerals that are used to reference the flowchart blocks in FIG. 3. Moreover, for clarity and ease of explanation, the system 100 is shown in FIGS. 4-7 in a configuration in which only the lateral map 208 and, when appropriate, the textual clearance message 210 and user interface field 212 are simultaneously displayed in the display area 202.

Turning first to FIG. 4, the lateral map 208 for the current aircraft flight plan is displayed in the display area 202 (302). As shown, the aircraft will take-off from Waypoint A (226A), proceed to Waypoint B (226B), then to Waypoint C (226C), and then onto various other Waypoints D (226D), E (226E), F (226F),..., in accordance with the current as-filed flight plan. The lateral map 208 for the current flight plan will remain displayed until the processor 104 receives an air traffic clearance message signal 116 (304). Thereafter, as shown in FIG. 5, the transceiver 122 demodulates the air traffic clearance message signal 116, the processor 104 processes the demodulated signal, and supplies appropriate display commands to the display 108, which in turn displays the textual clearance message 210 and the user interface field 212 (306).

The processor 104 also determines whether the received air traffic clearance message signal 116 indicates a modification to the current flight plan (308). If the message signal 116 does indicate such a modification, then the modification is graphically displayed on the lateral map 208 with the current flight plan (310). For example, as shown in FIG. 5, the textual clearance message indicates that the aircraft (e.g., "Aircraft 123") should fly directly to Waypoint C, and then consistent with the as-filed flight plan. Thus, the processor 104 supplies display commands to the display 108 so that an updated line segment 228', that connects Waypoint A (226A) to Waypoint C (226C), is also displayed on the lateral map 208. Though not depicted in FIG. 5, but as shown in FIG. 3, in a particular preferred embodiment, the flight-related data 204 associated with the updated modified flight plan is also displayed in the display area 202. This allows the pilot 109 to see how various parameters such as, for example, time and fuel consumption, would be effected by the flight plan modification before accepting or rejecting the modification.

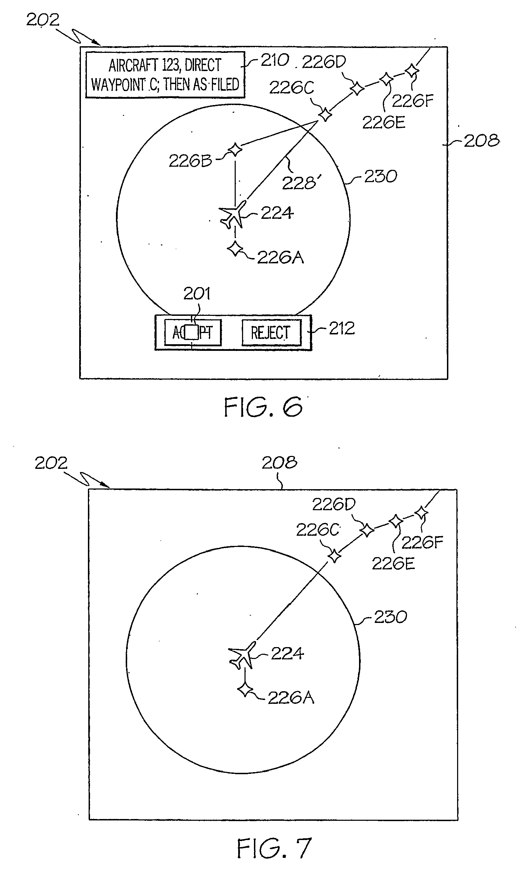

The processor 104 will continue supplying display commands to the display 108, such that the current and modified flight plans, the textual clearance message 210, and the user interface field 212 are simultaneously displayed, until the user 109 appropriately responds to the textual clearance message 210 (312). Once the appropriate response is provided, the processor 104 supplies an air traffic control response signal 124 to the transceiver 122, which in turn modulates the response signal 124 and transmits the signal to the air traffic control station that sent the originating message (314). The processor 104 also updates the flight plan, if necessary, consistent with the user response (316). For example, in the depicted embodiment, and as shown in FIG. 6, the user 109, using the user interface 102, places the cursor symbol 201 over the "Accept" button in the user interface field 212 and, once again, using the user interface 102, selects this as the response to the clearance message 210, thus accepting the modification to the as-filed flight plan. As a result, and as shown in FIG. 7, the flight plan is graphically updated on the lateral map 208. Though not depicted, it will additionally be appreciated that the flight-related data 204, and vertical profile 206 (if necessary) are also updated to reflect the new flight plan.

In addition to responding to textual clearance messages transmitted to the aircraft, it will be appreciated that the system 100 may be configured to allow the pilot 109 to transmit textual messages from the aircraft to, for example, an air traffic control center. In one embodiment, the pilot 109 may compose a message using the user interface keyboard 112. The message, while it is being composed, is displayed as a textual clearance message 210 in the display area 202. Then, when the pilot 109 is ready to send the message, he or she may transmit the message 210 by selecting the "Accept" button in the user interface field 212. Alternatively, when the pilot 109 is composing a textual message 210, the system 100 could be configured such that the user interface field 212 displays a "Transmit" button, rather than the "Accept" button. In either case, when the message 210 is transmitted, the processor 104 transmits the textual message data to the transceiver 122, which modulates the textual message data for transmission to the air traffic control center.

It will be appreciated that the use of the keyboard 112 to compose a pilot-initiated textual message 210 is merely exemplary of one particular embodiment, and that the system 100 could be configured to allow the pilot 109 to compose messages using other means of implementation. For example, the system 100 could be configured to allow the pilot 109 to select predetermined phrases or words from, for example, a static or drop-down menu, using the CCD 110. The words or phrases are preferably consistent with air traffic control syntax such, and may be, for example, cockpit control language such as disclosed in U.S. Patent No. 5,844,503, entitled "Method and Apparatus for Avionics Management," which is assigned to the assignee of the present application, the entirety of which is hereby incorporated by reference.

In addition to automatically updating a current flight plan in response to a clearance message, the system 100 is also preferably configured to generate and transmit a textual message in response to the pilot 109 graphically updating the flight plan. For example, with reference once again to FIGS. 4-7, if the pilot 109, using the user interface 102, graphically modified the flight plan so that the aircraft would fly directly from Waypoint A (226A) to Waypoint C (226C), then the processor 104 would automatically generate the textual clearance message 210. Upon acceptance by the pilot 109, the processor 104 would transmit the data to the transceiver 122, which would modulate and transmit the message 210 to the appropriate air traffic control center.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing the exemplary embodiment or exemplary embodiments. It should be understood that various changes can be made in the function and arrangement of elements without departing from the scope of the invention as set forth in the appended claims and the legal equivalents thereof.

## Claims

1. An aircraft flight management display system for displaying air traffic control clearance messages transmitted to an aircraft, the system comprising:
a processor (104) adapted to receive (i) data representative of a current aircraft flight plan and (ii) one or more textual clearance message signals representative of the air traffic control clearance messages transmitted to the aircraft and operable, in response thereto, to (i) determine if at least one of the textual air traffic control clearance messages indicates the current flight plan should be modified to a modified aircraft flight plan, and (ii) supply one or more flight plan display commands and one or more textual clearance message display commands; and
a display (108) coupled to receive the flight plan display commands and the textual clearance message display commands and operable, in response thereto, to substantially simultaneously display (i) one or more images representative of the current aircraft flight plan (226, 228), and (ii) the textual air traffic clearance messages (210) transmitted to the aircraft, and (iii) one or more images representative of the modified aircraft flight plan when at least one of the textual air traffic control clearance messages indicates the current flight plan should be modified.

2. The system of Claim 1 further comprising:
a user interface (102) configured to receive user input and operable, in response thereto, to supply one or more clearance message user response signals,
wherein the processor (104) is further coupled to receive the clearance message user response signals and is further operable, in response thereto, to transmit a response to the displayed textual air traffic control message.

3. The system of Claim 2, wherein:
the user interface (102) is further operable, in response to user input, to supply one or more flight plan modification signals; and
the processor (104) is further coupled to receive the flight plan modification signals and is further operable, in response thereto, to transmit a textual signal representative of the flight plan modification.

4. The system of Claim 3, wherein:
the processor (104) is further operable, in response to the flight plan modification signals, to supply flight plan modification display commands;
the display (108) is further operable, in response to the flight plan modification display commands, to substantially simultaneously display the images representative of the current aircraft flight plan and the images representative of the modified flight plan.

5. The system of Claim 2, wherein the processor (104) is further operable, in response to the user input command signals, to automatically update the current flight plan consistent with the transmitted response to the displayed air traffic control message.

6. The system of Claim 2, wherein the display (108) is further operable, in response to the display commands, to selectively display a user interface field (212) that allows a user to appropriately respond to the displayed textual air traffic control message via the user interface.

7. The system of Claim 1, further comprising:
a user interface (102) configured to receive user input and operable, in response thereto, to supply one or more flight plan modification command signals,
wherein the processor (104) is further coupled to receive the flight plan modification command signals and is further operable, in response thereto, to generate one or more textual clearance messages, and to supply one or more modified flight plan display commands and one or more clearance message display commands, and
wherein the display (108) is further coupled to receive the flight plan modification display commands and the clearance message display commands and is further operable, in response thereto, to substantially simultaneously display (i) one or more images representative of a modified aircraft flight plan and (ii) the textual clearance messages.

8. The system of Claim 1, wherein the data representative of aircraft flight plan includes navigation data, and wherein the system further comprises:
one or more navigation databases (106) in operable communication with the processor, each navigation database having navigation data stored therein,
wherein the processor (104) is further configured to selectively retrieve navigation data from each navigation database.

9. The system of Claim 1, wherein:
the processor (104) is further coupled to receive avionics data and is further operable, in response thereto, to supply one or more avionics data display commands; and
the display (108) is further coupled to receive the avionics data display commands and is further operable, in response thereto, to display one or more images representative of the avionics data substantially simultaneously with the current aircraft flight plan.

## Patentansprüche

1. Flugzeugflugmanagementanzeigesystem zum Anzeigen von Luftverkehrssteuerfreigabenachrichten, die an ein Flugzeug gesendet werden, wobei das System Folgendes umfasst:
ein Prozessor (104), der ausgelegt ist, (i) Daten, die für einen aktuellen Flugzeugflugplan repräsentativ sind, und (ii) ein oder mehrere Textfreigabenachrichtensignale, die für die an das Flugzeug gesendeten Luftverkehrssteuerfreigabenachrichten repräsentativ sind, zu empfangen, und betreibbar ist, in Reaktion darauf (i) zu bestimmen, ob mindestens eine der Textluftverkehrssteuerfreigabenachrichten angibt, dass der aktuelle Flugplan zu einem geänderten Flugzeugflugplan geändert werden soll, und (ii) einen oder mehrere Flugplananzeigebefehle und einen oder mehrere Textfreigabenachrichtenanzeigebefehle zu liefern; und
eine Anzeige (108), die angekoppelt ist, um die Flugplananzeigebefehle und die Textfreigabenachrichtenanzeigebefehle zu empfangen, und betreibbar ist, in Reaktion darauf (i) ein oder mehrere Bilder, die für den aktuellen Flugzeugflugplan (226, 228) repräsentativ sind, und (ii) die an das Flugzeug gesendeten Textluftverkehrsfreigabenachrichten (210) und (iii) ein oder mehrere Bilder, die für den geänderten Flugzeugflugplan repräsentativ sind, im Wesentlichen gleichzeitig anzuzeigen, wenn mindestens eine der Textluftverkehrssteuerfreigabenachrichten angibt, das der aktuelle Flugplan geändert werden soll.

2. System nach Anspruch 1, das ferner Folgendes umfasst:
eine Anwenderoberfläche (102), die konfiguriert ist, eine Anwendereingabe zu empfangen, und die betreibbar ist, in Reaktion darauf ein oder mehrere Freigabenachrichtenanwenderantwortsignale zu liefern,
wobei die Prozessor (104) ferner angekoppelt ist, um die Freigabenachrichtenanwendersignale zu empfangen, und ferner betreibbar ist, in Reaktion darauf eine Antwort auf die angezeigte Textluftverkehrssteuerfreigabenachricht zu senden.

3. System nach Anspruch 2, wobei:
die Anwenderoberfläche (102) ferner betreibbar ist, in Reaktion auf die Anwendereingabe ein oder mehrere Flugplanänderungssignale zu liefern; und
die Prozessor (104) ferner angekoppelt ist, um die Flugplanänderungssignale zu empfangen, und ferner betreibbar ist, in Reaktion darauf ein Textsignal, das für die Flugplanänderung repräsentativ ist, zu senden.

4. System nach Anspruch 3, wobei:
die Prozessor (104) ferner betreibbar ist, in Reaktion auf die Flugplanänderungssignale Flugplanänderungsanzeigebefehle zu liefern;
die Anzeige (108) ferner betreibbar ist, in Reaktion auf die Flugplanänderungsanzeigebefehle die Bilder, die für den aktuellen Flugzeugflugplan repräsentativ sind, und die Bilder, die für den geänderten Flugplan repräsentativ sind, im Wesentlichen gleichzeitig anzuzeigen.

5. System nach Anspruch 2, wobei der Prozessor (104) ferner betreibbar ist, in Reaktion auf die Anwendereingabebefehlssignale den aktuellen Flugplan, der mit der gesendeten Antwort auf die angezeigte Luftverkehrssteuerfreigabenachricht übereinstimmt, automatisch zu aktualisieren.

6. System nach Anspruch 2, wobei die Anzeige (108) ferner betreibbar ist, in Reaktion auf die Anzeigebefehle wahlweise ein Anwenderoberflächenfeld (212) anzuzeigen, dass es einem Anwender ermöglicht, angemessen auf die angezeigte Textluftverkehrssteuerfreigabenachricht über die Anwenderoberfläche zu antworten.

7. System nach Anspruch 1, das ferner Folgendes umfasst:
eine Anwenderoberfläche (102), die konfiguriert ist, eine Anwendereingabe zu empfangen, und die betreibbar ist, in Reaktion darauf ein oder mehrere Flugplanänderungsbefehlssignale zu liefern,
wobei die Prozessor (104) ferner angekoppelt ist, um die Flugplanänderungsbefehlssignale zu empfangen, und ferner betreibbar ist, in Reaktion darauf eine oder mehrere Textfreigabenachrichten zu erzeugen und einen oder mehrere geänderte Flugplananzeigebefehle und einen oder mehrere Freigabenachrichtenanzeigebefehle zu liefern, und
wobei die Anzeige (108) ferner angekoppelt ist, um die Flugplanänderungsanzeigebefehle und die Freigabenachrichtenanzeigebefehle zu empfangen und ferner betreibbar ist, in Reaktion darauf (i) ein oder mehrere Bilder, die für einen geänderten Flugzeugflugplan repräsentativ sind, und (ii) die Textfreigabenachrichten im Wesentlichen gleichzeitig anzuzeigen.

8. System nach Anspruch 1, wobei die Daten, die für einen Flugzeugflugplan repräsentativ sind, Navigationsdaten enthalten und wobei das System ferner Folgendes umfasst:
eine oder mehrere Navigationsdatenbanken (106) in betriebstechnischer Kommunikation mit dem Prozessor, wobei jede Navigationsdatenbank in ihr gespeicherte Navigationsdaten besitzt,
wobei der Prozessor (104) ferner konfiguriert ist, wahlweise Navigationsdaten aus jeder Navigationsdatenbank zu erlangen.

9. System nach Anspruch 1, wobei:
der Prozessor (104) ferner angekoppelt ist, um Bordelektronikdaten zu empfangen, und ferner betreibbar ist, in Reaktion darauf einen oder mehrere Bordelektronikanzeigebefehle zu liefern; und
die Anzeige (108) ferner angekoppelt ist, um die Bordelektronikdatenanzeigebefehle zu empfangen, und ferner betreibbar ist, in Reaktion darauf ein oder mehrere Bilder, die für die Bordelektronikdaten repräsentativ sind, im Wesentlichen gleichzeitig mit dem aktuellen Flugzeugflugplan anzuzeigen.

## Revendications

1. Système d'affichage de gestion de vol d'aéronef pour afficher des messages d'autorisation du contrôle de la circulation aérienne transmis à un aéronef, le système comprenant :
un processeur (104) adapté à recevoir (i) des données représentant un plan de vol d'aéronef actuel et (ii) un ou plusieurs signaux de messages textuels d'autorisation représentant des messages d'autorisation du contrôle de la circulation aérienne transmis à l'aéronef et apte, en réponse à ces derniers, à (i) déterminer si au moins un des messages textuels d'autorisation du contrôle de la circulation aérienne indique qu'il convient de modifier le plan de vol actuel pour produire un plan de vol d'aéronef modifié, et (ii) fournir une ou plusieurs commandes d'affichage de plan de vol et une ou plusieurs commandes d'affichage de messages textuels d'autorisation ; et
un affichage (108) couplé pour recevoir les commandes d'affichage de plan de vol et les commandes d'affichage de messages textuels d'autorisation et apte, en réponse à ces dernières, à afficher sensiblement simultanément (i) une ou plusieurs images représentant le plan de vol d'aéronef actuel (226, 228), et (ii) les messages textuels d'autorisation du contrôle de la circulation aérienne (210) transmis à l'aéronef, et (iii) une ou plusieurs images représentant le plan de vol d'aéronef modifié si au moins un des messages textuels d'autorisation du contrôle de la circulation aérienne indique qu'il convient de modifier le plan de vol actuel.

2. Système selon la revendication 1, comprenant en outre :
une interface utilisateur (102) conçue pour recevoir une entrée utilisateur et apte, en réponse à cette dernière, à fournir un ou plusieurs signaux de réponse utilisateur à un message d'autorisation,
lequel processeur (104) est en outre couplé pour recevoir les signaux de réponse utilisateur à un message d'autorisation et est en outre apte, en réponse à ces derniers, à transmettre une réponse au message textuel d'autorisation du contrôle de la circulation aérienne affiché.

3. Système selon la revendication 2, dans lequel :
l'interface utilisateur (102) est en outre apte, en réponse à une entrée utilisateur, à fournir un ou plusieurs signaux de modification de plan de vol ; et
le processeur (104) est en outre couplé pour recevoir les signaux de modification de plan de vol et est en outre apte, en réponse à ces derniers, à transmettre un signal textuel représentant la modification de plan de vol.

4. Système selon la revendication 3, dans lequel :
le processeur (104) est en outre apte, en réponse aux signaux de modification de plan de vol, à fournir des commandes d'affichage de modification de plan de vol ;
l'affichage (108) est en outre apte, en réponse aux commandes d'affichage de modification de plan de vol, à afficher sensiblement simultanément les images représentant le plan de vol d'aéronef actuel et les images représentant le plan de vol modifié.

5. Système selon la revendication 2, dans lequel le processeur (104) est en outre apte, en réponse aux signaux de commande d'entrée utilisateur, à mettre à jour automatiquement le plan de vol actuel conformément à la réponse transmise au message d'autorisation du contrôle de la circulation aérienne affiché.

6. Système selon la revendication 2, dans lequel l'affichage (108) est en outre apte, en réponse aux commandes d'affichage, à afficher de façon sélective un champ d'interface utilisateur (212) qui permet à un utilisateur de répondre de façon appropriée au message textuel d'autorisation du contrôle de la circulation aérienne affiché par le biais de l'interface utilisateur.

7. Système selon la revendication 1, comprenant en outre :
une interface utilisateur (102) conçue pour recevoir une entrée utilisateur et apte, en réponse à cette dernière, à fournir un ou plusieurs signaux de commande de modification de plan de vol,
lequel processeur (104) est en outre couplé pour recevoir les signaux de commande de modification de plan de vol et est en outre apte, en réponse à ces derniers, à générer un ou plusieurs messages textuels d'autorisation et à fournir une ou plusieurs commandes d'affichage de plan de vol modifié et une ou plusieurs commandes d'affichage de message d'autorisation, et
lequel affichage (108) est en outre couplé pour recevoir les commandes d'affichage de modification de plan de vol et les commandes d'affichage de message d'autorisation et est en outre apte, en réponse à ces dernières, à afficher sensiblement simultanément (i) une ou plusieurs images représentant un plan de vol d'aéronef modifié et (ii) les messages textuels d'autorisation.

8. Système selon la revendication 1, dans lequel les données représentant un plan de vol d'aéronef comprennent des données de navigation, et lequel système comprend en outre :
une ou plusieurs bases de données de navigation (106) en communication fonctionnelle avec le processeur, chaque base de données de navigation stockant des données de navigation,
lequel processeur (104) est en outre conçu pour extraire de façon sélective des données de navigation de chaque base de données de navigation.

9. Système selon la revendication 1, dans lequel :
le processeur (104) est en outre couplé pour recevoir des données d'avionique et est en outre apte, en réponse à ces dernières, à fournir une ou plusieurs commandes d'affichage de données d'avionique ; et
l'affichage (108) est en outre couplé pour recevoir les commandes d'affichage de données d'avionique et est en outre apte, en réponse à ces dernières, à afficher une ou plusieurs images représentant les données d'avionique sensiblement simultanément au plan de vol d'aéronef actuel.
